# EUROPEAN PATENT SPECIFICATION

(11) **EP 2 808 711 B1**
(45) Date of publication and mention of the grant of the patent: **16.08.2017**
(21) Application number: 13740875.3
(22) Date of filing: 25.01.2013
(51) Int. Cl.: G02B 5/30, G02B 1/04, G02B 1/08, G02C 7/12

(54) **METHOD OF MANUFACTURING POLARIZING LENS**
VERFAHREN ZUR HERSTELLUNG EINER POLARISIERENDEN LINSE
PROCÉDÉ DE FABRICATION D'UNE LENTILLE POLARISANTE

(30) Priority: 27.01.2012 JP 2012015492; 22.03.2012 JP 2012064912
(43) Date of publication of application: 03.12.2014
(73) Proprietor: Hoya Corporation, Tokyo 161-8525 (JP)
(72) Inventor: OHNISHI, Tomofumi, Shinjuku-ku, Tokyo 161-8525 (JP); YAMADA, Yasuko, Shinjuku-ku, Tokyo 161-8525 (JP)
(74) Representative: Adam, Holger
(86) International application number: PCT/JP2013/051655
(87) International publication number: WO 2013/111878

(56) References cited:
- WO-A1-2010/113995
- JP-A- 2007 536 589
- JP-A- 2008 527 401
- JP-A- 2009 237 361
- JP-A- 2010 256 895
- JP-A- 2011 150 323
- US-A1- 2010 304 019

## Description

### Cross-reference to related applications

This application claims the benefit of priority to Japanese Patent Application No. 2012-015492 filed on January 27, 2012 and Japanese Patent Application No. 2012-064912 filed on March 22, 2012, which are expressly incorporated herein by reference in their entirety.

### Technical field

The present invention relates to a method of manufacturing a polarizing lens, and more particularly, to a method of manufacturing a polarizing lens in which haze (clouding) is inhibited and which is suitable as an eyeglass lens.

### Background art

Polarizing lenses are widely employed as eyeglass lenses to reduce the glare experienced by the human eye in daily life and sports. Generally, the polarizing property of a dichroic dye is utilized to prevent glare. Such polarizing lenses are usually fabricated by forming a polarizing layer comprising a dichroic dye on a substrate or on an orientation layer provided on a substrate. Methods of manufacturing such polarizing lenses are disclosed, for example, in Document 1 (published Japanese translation of PCT international publication for patent application (TOKUHYO) No. 2008-527401) and Document 2 (Japanese Unexamined Patent Publication (KOKAI) No. 2009-237361). The contents of Document 1, English language family members US2006/146234A1, U.S. Patent No. 7,625,626, US2010/028532A1, and U.S. Patent No. 7,922,847; and Document 2 and English language family member US2011/102892A1. US 2010/ 30 40 19 A1 discloses a method of manufacturing a polarising lens comprising the forming of a polarising layer by spin coating an aqueous polarising dye mixture (Varilight 2S) solution onto a lens substrate, dipping the lens into an aqueous solution of of 3-aminopropyltriethoxysilane (concentration of 10% by weight in the solution) for 15 minutes at 50 degrees Celsius. After the substrate was dried and cured, it was then dipped in a 10 wt % glycidoxypropyltrimethoxysilane solution for 30 minutes at room temperature.

### Summary of the Invention

Document 1 above describes in Examples the formation of a protective layer using a silane coupling agent after providing a polarizing film on an orientation layer. More specifically, it describes the formation of a protective layer by successively coating 3-aminopropyltriethoxysilane (an amino group-containing silane coupling agent) and 3-glycidoxypropyltrimethoxysilane (an epoxy group-containing silane coupling agent) on a polarizing film and then conducting curing by heating. The silane coupling agents contained in the protective layer are thought to play the role of penetrating into the polarizing film and immobilizing the orientation state of the dichroic dye. However, investigation by the present inventors has revealed that haze sometimes occurs in polarizing lenses on which the above protective layer has been formed.

An aspect of the present invention provides for a high-quality polarizing lens in which haze is inhibited.

The present inventors conducted extensive research, resulting in the following discoveries.

Document 2 states that in a polarizing element having an orientation layer comprised of an inorganic substance, cracks occur in the orientation layer due to a difference in thermal expansion between the orientation layer and the substrate, sometimes causing haze. However, when the present inventors observed polarizing lenses in which haze had occurred, it became clear that the generation of cracks in the polarizing layer was sometimes the cause of the haze.

Accordingly, the present inventors conducted further extensive research into discovering a means of inhibiting the generation of cracks in the polarizing layer. As a result, they discovered that by greatly intensifying the treatment (epoxysilane treatment) with the epoxy group-containing silane coupling agent described in Document 1 relative to the treatment conventionally conducted so as to increase the film thickness of the polarizing layer of equal to or greater than 8 percent, it was possible to inhibit the generation of haze in the polarizing layer. Based on investigation by the present inventors, even when the treatment with an amino group-containing silane coupling agent (silane coupling agent treatment) - known to be a polarizing layer treatment in the same manner as an epoxysilane treatment - was intensified, the generation of haze in the polarizing layer was not inhibited. The fact that the generation of haze in the polarizing layer was specifically inhibited by intensifying the epoxysilane treatment in this manner has been discovered for the first time ever by the present inventors.

This point will be described in greater detail. A polarizing layer containing a dichroic dye is a layer that tends not to thermally expand in a polarizing lens. However, the lens substrate constituting much of the portion beneath it has a relatively greater tendency to undergo thermal expansion. As a result, in the heat treatment that is conducted in the process of manufacturing a polarizing lens (for example, a heat treatment to cure a thermosetting hardcoat layer), the polarizing layer is subjected to great tensile stress from beneath, and when the polarizing layer cannot withstand this tensile stress, it cracks. By contrast, investigation by the present investors revealed that it was possible to inhibit the generation of haze in the polarizing layer by causing an epoxy group-containing silane coupling agent to impregnate the polarizing layer such that the rate of increase in film thickness of the polarizing layer was equal to or greater than 8 percent.

The present invention was devised based on the above discovery.

An aspect of the present invention relates to a method of manufacturing a polarizing lens, which comprises:
forming a polarizing layer comprising a dichroic dye on a lens substrate; and
conducting an epoxysilane treatment to impregnate the polarizing layer with an epoxy group-containing silane coupling agent such that a rate of increase in a film thickness of the polarizing layer by the epoxysilane treatment is equal to or greater than 9 percent.

In an embodiment, the above manufacturing method further comprises conducting an aminosilane treatment to impregnate the polarizing layer with an amino group-containing silane coupling agent prior to conducting the epoxysilane treatment.

In an embodiment, the rate of increase in the film thickness is equal to or greater than 9 percent and equal to or lower than 10 percent.

In an embodiment, the manufacturing method further comprises, after the epoxysilane treatment, conducting a functional film-forming step in which heating is conducted.

In an embodiment, in the manufacturing method, the polarizing layer is formed on the surface of an orientation layer after forming the orientation layer on the lens substrate.

The present invention can provide a high-quality polarizing lens in which generation of haze is inhibited.

### Detailed Description of the Embodiments

The method of manufacturing a polarizing lens of an aspect of the present invention comprises forming a polarizing layer comprising a dichroic dye on a lens substrate; and conducting an epoxysilane treatment to impregnate the polarizing layer with an epoxy group-containing silane coupling agent such that the rate of increase in the film thickness of the polarizing layer by the epoxysilane treatment is equal to or greater than 8 percent. In this manner, as set forth above, it is possible to inhibit cracking in the polarizing layer and generation of haze caused by the cracking. As a result, it becomes possible to provide a high-quality polarizing lens. The polarizing lens thus obtained is suitable as an eyeglass lens of which high transparence is required.

The method of manufacturing a polarizing lens of an aspect of the present invention will be described in greater detail below.

### Lens substrate

The lens substrate can be comprised of a material that is commonly employed as a lens substrate in eyeglass lenses, a plastic such as a polyurethane-based material (such as polyurethane, polyurethane urea, and polythiourethane), polycarbonate or diethylene glycol bisallyl carbonate; or an inorganic glass. Of these lens substrates, the polyurethane-based lens substrates are useful for fabricating high-refractive-index eyeglass lenses, and the diethylene glycol bisallylcarbonate-based lens substrates are useful for fabricating general-purpose eyeglass lenses. Among the various lens substrates, these readily undergo thermal expansion. As a result, polarizing lenses comprising these lens substrates tend to undergo pronounced cracking of the polarizing layer. By contrast, the present invention intensifies the epoxysilane treatment as described above, thereby being capable of inhibiting cracking in the polarizing layer and the generation of haze caused by such cracking. Neither the thickness nor the diameter of the lens substrate is specifically limited. However, a thickness of about 1 to 30 mm and a diameter of about 50 to 100 mm are usual. When the polarizing lens that is manufactured by the present invention is an eyeglass lens for vision correction, a lens substrate with a refractive index ne of about 1.5 to 1.8 is normally employed. The lens substrate employed is normally colorless. However, to the extent that transparence is not lost, a colored lens substrate can be employed. The shape of the surface of the substrate on which the polarizing layer is formed is not specifically limited; it can be of any shape, such as planar, convex, and concave.

### Orientation layer

The polarizing property of the dichroic dye contained in the polarizing layer is achieved primarily by uniaxial orientation of the dichroic dye. The method of coating a coating liquid containing a dichroic dye on a grooved surface is generally employed to uniaxially orient the dichroic dye, and can be employed in the present invention. The grooves for uniaxially orienting the dichroic dye can be formed on the surface of the substrate. It is advantageous to form them on the surface of an orientation layer provided on the lens substrate from the perspective of achieving a good polarizing property with the dichroic dye.

The orientation layer is normally provided either directly or indirectly via another layer on the lens substrate. An example of a layer that can be formed between the lens substrate and the orientation layer is a hardcoat layer. The hardcoat layer is not specifically limited. A coating film comprised of an organic silicon compound to which a microparticulate metal oxide has been added is suitable. For example, reference can be made to Japanese Unexamined Patent Publication (KOKAI) No. 2007-77327, paragraphs [0071] to [0074] and Japanese Unexamined Patent Publication (KOKAI) No. 2009-237361, paragraph [0027]. It is also possible to employ an acrylic compound instead of an organic silicon compound to form the hardcoat layer. A known ultraviolet radiation-curable resin such as an acrylate monomer or oligomer, or an EB-curable resin, can also be employed as a coating composition for forming the hardcoat layer. The thickness of the hardcoat layer is about 0.5 to 10 µm, for example. Commercial lens substrates with hardcoats are available. An orientation layer can be formed on such a lens substrate in the present invention.

The thickness of the orientation layer is normally about 0.02 to 5 µm, desirably about 0.05 to 0.5 µm. The orientation layer can be formed by depositing a film-forming material by a known film-forming method such as vapor deposition or sputtering, or can be formed by a known coating method such as dipping or spin-coating. Examples of suitable film-forming materials are metals, semimetals, and their oxides, complexes, and compounds. Materials selected from among Si, Al, Zr, Ti, Ge, Sn, In, Zn, Sb, Ta, Nb, V, Y, and Cr; oxides thereof; and complexes and compounds of these materials are preferably employed. Among them, from the perspective of the ease of imparting functions to the orientation layer, silicon oxides such as SiO and SiO₂ are desirable. Of these, SiO₂ is desirable from the perspective of its reactivity with silane coupling agents, described further below.

An example of the orientation layer that is formed by the above coating method is a sol-gel film containing an inorganic oxide sol. Examples of coating liquids that are suitable for forming the sol-gel film are coating liquids containing alkoxysilanes and hexaalkoxydisiloxanes together with an inorganic oxide sol. From the perspective of the ease of imparting functions as an orientation film, the alkoxysiloxanes are desirably those denoted by general formula (1) described in Japanese Unexamined Patent Publication (KOKAI) No. 2009-237361. The hexaalkoxydisiloxanes are desirably those denoted by general formula (2) described in Japanese Unexamined Patent Publication (KOKAI) No. 2009-237361. These coating liquids can contain either, or both, an alkoxysiloxane and a hexaalkoxydisiloxane. As needed, they can also contain the functional group-containing alkoxysilane denoted by general formula (3) described in Japanese Unexamined Patent Publication (KOKAI) No. 2009-237361. For details regarding the coating liquid and film-forming method (coating method), reference can be made to paragraphs [0011] to [0023] and [0029] to [0031], and Examples described, in Japanese Unexamined Patent Publication (KOKAI) No. 2009-237361.

Next, grooves are normally formed on the orientation layer that has been formed to uniaxially orient the dichroic dye in the coating liquid that has been coated on the orientation layer. When the coating liquid containing the dichroic dye is coated on the surface of an orientation layer in which grooves have been formed, the properties of the dichroic dye cause the dye to orient along the grooves or in a direction perpendicular to the grooves. Thus, the dichroic dye can be uniaxially oriented and its polarizing property can be achieved well. The grooves can be formed, for example, by the rubbing step that is conducted to orient liquid crystal molecules. The rubbing step is a step in which a surface being polished is rubbed in a certain direction with a piece of cloth or the like. For details, reference can be made to the specification of U.S. Patent No. 2,400,877 or U.S. Patent No. 4,865,668, for example. Alternatively, grooves can be formed on the orientation layer by the polishing treatment described in Japanese Unexamined Patent Publication (KOKAI) No. 2009-237361, paragraphs [0033] to [0034]. It suffices to establish the depth, pitch, and the like of the grooves that are formed so as to uniaxially orient the dichroic dye.

### Step of forming polarizing layer (dichroic dye layer)

The polarizing layer (dichroic dye layer) that is provided either directly or via an orientation layer or the like on the lens substrate will be described next.

The term "dichroic property" means a property due to which the color of transmitted light differs based on the direction of propagation due to the presence in a medium of selective light absorption anisotropy. A dichroic dye has a property whereby the absorption of polarized light intensifies in a specific direction of the dye molecules and decreases in a direction perpendicular thereto. Some dichroic dyes are known to exhibit liquid-crystal states at certain concentrations and temperature ranges when water is employed as solvent. Such liquid-crystal states are referred to as lyotropic liquid crystals. The liquid-crystal states of dichroic dyes can be used to orient the dye molecules in a specific direction, making it possible to exhibit a stronger dichroic property. It is possible to cause a dichroic dye to uniaxially orient by coating a coating liquid containing a dichroic dye on a surface on which grooves have been formed, thereby forming a polarizing film having a better polarizing property.

The dichroic dye that is employed in the present invention is not specifically limited; examples are the various dichroic dyes that are commonly employed in polarizing members. Specific examples are azo-based, anthraquinone-based, merocyanine-based, styryl-based, azomethine-based, quinone-based, quinophthalone-based, perylene-based, indigo-based, tetrazine-based, stilbene-based, and benzidine-based dyes. The dichroic dyes described in U.S. Patent No. 2,400,877 and published Japanese translation of PCT international publication for patent application (TOKUHYO) No. 2002-527786 can also be employed.

The dichroic dye-containing coating liquid can be a solution or a suspension. Since most dichroic dyes are water soluble, the coating liquid is often an aqueous solution with water as solvent. The content of the dichroic dye in the coating liquid is, for example, about 1 to 50 mass percent, but is not limited to the above range so long as the desired polarizing property can be achieved.

Other components can be contained in addition to the dichroic dye in the coating liquid. Examples of other components are dyes other than dichroic dyes. It is possible to manufacture a polarizing member of desired hue by blending such dyes. From the perspective of further enhancing coating properties and the like, additives such as rheology modifiers, adhesion promoters, plasticizers, and leveling agents can be compounded as needed.

The method of coating the coating liquid is not specifically limited. Examples are the above-mentioned known methods, such as dipping and spin-coating. The thickness of the polarizing film is not specifically limited, and is usually about 0.05 to 5 µm. Normally, the silane coupling agent described further below impregnates the polarizing film and is essentially contained in the polarizing film.

When employing a water-soluble dye as the dichroic dye, it is desirable to subject it to a treatment rendering it insoluble in water after coating and drying the coating liquid to enhance film stability. The water insolubility treatment can be conducted, for example, by ion-exchanging the terminal hydroxyl groups of the dye molecules or by creating a state of chelation between the dye and metal ions. To this end, it is desirable to use the method of immersing the polarizing film that has been formed in an aqueous solution of a metal salt. The metal salt employed is not specifically limited. Examples are AlCl₃, BaCl₂, CdCl₂, ZnCl₂, FeCl₂, and SnCl₃. Following the water insolubility treatment, additional drying for the surface of the polarizing film may be conducted.

### Epoxysilane treatment

In the present invention, the polarizing layer is subjected to an epoxysilane treatment by impregnation with an epoxy group-containing silane coupling agent. By the treatment, the film thickness of the polarizing layer is increased by equal to or more than 9 percent by impregnation with an epoxy group-containing silane coupling agent, thereby forming a polarizing layer in which haze generation is inhibited. The rate of increase in the film thickness of the polarizing layer in the present invention refers to the rate of increase in the film thickness at the geometric center of the lens.

Examples of methods of impregnating the polarizing layer with an epoxy group-containing silane coupling agent are the coating method of spin-coating, spraying, or the like a liquid (epoxysilane solution) containing an epoxy group-containing silane coupling agent on the surface of the polarizing layer, and the method of immersing a lens on which a polarizing layer has been formed in an epoxysilane solution. The solvent employed in the epoxysilane solution is desirably a water-based solvent (in the present invention, "based" is to be construed as being synonymous with "containing") from the perspective of the solubility and the like of the epoxy group-containing silane coupling agent. Specific examples are water and mixed solvents of water and alcohols (methanol, ethanol, and the like).

The rate of increase in the film thickness of the polarizing layer by the epoxysilane treatment can be controlled by the concentration of the epoxy group-containing silane coupling agent in the epoxysilane solution employed. The concentration is desirably equal to or greater than 5 mass percent, preferably equal to or greater than 10 mass percent - for example, 10 to 15 mass percent - to achieve the rate of increase in the film thickness of equal to or greater than 8 percent. The rate of increase in the film thickness by the epoxysilane treatment can also be controlled by means of coating or impregnating condition such as the quantity of epoxysilane solution that is applied and the period of immersion in the solution. The more the epoxysilane treatment is intensified the better in terms of inhibiting the generation of cracking in the polarizing layer. However, the greater the intensification, the greater the reduction in productivity due to the increased duration of the epoxysilane treatment and the greater the increase in cost due to an increase in the quantity of coupling agent required for the epoxysilane treatment. Thus, when productivity and cost are taken into account, the rate of increase in the film thickness by the epoxysilane treatment is desirably equal to or lower than 15 percent, preferably equal to or lower than 10 percent.

The term "silane coupling agent" refers to generally having the structure denoted by R-Si(OR')₃ (wherein the multiple instances of R' that are present can be identical or different) and the term "epoxy group-containing silane coupling agent" refers to containing an epoxy group as the functional group denoted by R above. The epoxy group is generally bonded to the Si via a divalent linking group. Examples of divalent linking groups are the linking groups included in the specific examples of compounds given further below. The functional group denoted by R' above is normally an alkyl group. The number of carbon atoms in the alkyl group is, for example, 1 to 10, desirably 1 to 3. Specific examples of the epoxy group-containing silane coupling agent are γ-glycidoxypropyltrimethoxysilane (γ-GPS), γ-glycidoxypropylmethyldiethoxysilane, and other glycidoxy group-containing trialkoxysilanes; β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, and other epoxyalkylalkoxysilanes. Known additives can be incorporated together with the epoxy group-comprising silane coupling agent in the epoxysilane solution.

In the above epoxysilane treatment, after impregnation with the epoxy group-containing silane coupling agent, a heat treatment can be conducted as needed to promote the coupling agent reaction. The heat treatment can be conducted by placing the lens that has been impregnated with the epoxy group-comprising silane coupling agent in a heating furnace for a prescribed period. The temperature of the atmosphere within the furnace during heating and the heating period can be determined based on the type of epoxy group-containing silane coupling agent that is employed. They are normally 40 to 200°C and about 30 minutes to 30 hours, respectively.

The method of manufacturing a polarizing lens of the present invention comprises the above step of forming a polarizing layer and epoxysilane treatment as essential steps. Steps that can normally be conducted in the manufacturing of a polarizing lens can also be included as optional steps. Specific examples of such steps will be given below.

### Aminosilane treatment

To better maintain the orientation state of the dichroic dye in the polarizing layer, it is desirable to conduct an aminosilane treatment by impregnating the polarizing layer prior to the epoxysilane treatment with an amino group-containing silane coupling agent. The term "amino group-containing silane coupling agent" refers to the coupling agent containing an amino group being incorporated as the functional group denoted by R in the structure denoted by R-Si(OR')₃ above. The details of the structural formula relating to the amino group-containing silane coupling agent are as set forth for the epoxy group-containing silane coupling agent above with the exception that an amino group is incorporated in R. Specific examples of amino group-containing silane coupling agents are N-(β-aminoethyl)-γ-aminopropyltrimethoxysilane, N-(β-aminoethyl)-γ-aminopropylmethyldimethoxysilane, γ-aminopropylmethyldimethoxysilane, γ-aminopropylmethyldiethoxysilane, γ-aminopropyltrimethoxysilane, γ-aminopropyltriethoxysilane, N-(β-aminoethyl)-γ-aminopropylmethyldimethoxysilane, N-(β-aminoethyl)-γ-aminopropylmethyldiethoxysilane, and other amino group-containing alkoxysilanes. The method of impregnating the amino group-containing silane coupling agent into the polarizing layer is identical to the method conducted in the epoxysilane treatment. The solvents that can be employed in the amino group-containing silane coupling agent solution (aminosilane solution) are also identical to those set forth for the epoxysilane treatment. From the perspectives of solubility and the immobilization effect on the dichroic dye, the concentration of the amino group-containing silane coupling agent in the aminosilane solution is suitably about 1 to 20 mass percent. Further, the polarizing layer that has been impregnated with the amino group-containing silane coupling agent can be subjected to a heat treatment to promote reaction of the coupling agent as needed. Details of the heat treatment are identical to those set forth for the epoxysilane treatment above. In the present invention, the surface of the polarizing layer can be rinsed with pure water, de-ionized water, or the like to remove excess silane coupling agent that has adhered to the outermost surface following impregnation with the amino group-containing silane coupling agent or epoxy group-containing silane coupling agent.

### Forming functional films

One or two layers of functional films can be formed to impart desired performance to the polarizing lens on the polarizing layer that has been subjected to the above epoxysilane treatment. One example of such a functional film is a hardcoat layer for enhancing the durability of the polarizing lens. From the perspective of achieving both enhanced lens durability and optical characteristics, the thickness thereof desirably falls within a range of 0.5 to 10 µm. The hardcoat layer can be in the form of a thermosetting hardcoat layer that is cured by heating or a photocuring hardcoat layer that is cured by irradiation with light. Any type of hardcoat layer can be formed in the present invention. For the reasons set forth above, it is possible to obtain a high-quality polarizing layer without the generation of cracks that cause haze in the present invention, even with a heat treatment to form a thermosetting hardcoat layer. Thus, the present invention is suitable as a method of manufacturing a polarizing lens having a thermosetting hardcoat layer. A coating in which a microparticulate metal oxide compound has been added to the above organic silicon compound can be formed as a thermosetting hardcoat layer. The heat curing treatment can be conducted, for example, by placing a lens that has been coated with a coating liquid containing an organic silicon compound and a microparticulate metal oxide for about 30 minutes to 2 hours in an environment with a temperature of atmosphere of 50 to 150°C.

Examples of other functional films are antireflective films, water-repellent films, ultraviolet-absorbing films, infrared-absorbing films, photochromic films, and antistatic films. For reasons identical to those set forth above, the method of manufacturing a polarizing lens according to an aspect of the present invention is suitable as a method of manufacturing a polarizing lens having a functional film formed by film formation in which heating is conducted, and is not limited to thermosetting hardcoat layers.

### Reference aspect will be described next.

Documents 1 and 2 set forth above describe the formation of a protective layer using a silane coupling agent after providing a polarizing film on the orientation layer. Specifically, they disclose that an amino group-containing silane coupling agent (aminosilane) and an epoxy group-containing silane coupling agent (epoxysilane) are sequentially coated on the polarizing film and a heat treatment is conducted to form a protective layer. The silane coupling agent is thought to play the roles of both immobilizing the orientation state of the dichroic dye in the polarizing layer as well as enhancing the coating strength of the polarizing layer and adhesion between the orientation layer and the polarizing layer. This point will be further described. When a silane coupling agent is inserted between dichroic dye molecules that have been uniaxially oriented by means of an orientation layer, the silane coupling agent bonds to the orientation layer by means of a silanol group generated by hydrolysis. As a result, the silane coupling agent becomes immobilized between the dichroic dye molecules and the dichroic dye molecules tend not to associate. Thus, the orientation state of the dichroic dye can be maintained. Further, it is thought that adhesion between the orientation layer and the polarizing layer can be heightened. When orientation of the dichroic dye is poor, the generation of cracks in the polarizing layer sometimes causes hazing of the lens. Since the polarization performance also decreases, it is important to maintain the state of orientation of the dichroic dye to obtain a high-quality polarizing lens. The good adhesion between the polarizing layer and the layer beneath it and the good coating strength contribute to enhancing the durability of the polarizing lens.

When an aminosilane is employed here as a coupling agent to bring about bonding to the orientation layer, following the heat treatment, the aminosilane is presumed to assume an immobilized state on the orientation layer with the amino group facing upward. When the epoxysilane is applied thereover and the heat treatment is conducted, the epoxysilane is thought to play the role of a crosslinking agent and enhance the coating strength. This is thought to occur because the epoxy group is highly reactive to the amino group, so the amino group and epoxy group form a bond. At the same time, a silanol group produced by hydrolysis in the epoxysilane condenses, forming a siloxane bond.

However, when a heat treatment is applied, the time is required for the heat treatment and for the lens to cool to room temperature following the heat treatment. Therefore, conducting heat treatments following application of the aminosilane and following application of the epoxysilane, respectively, compromises productivity. Additionally, when these heat treatments are omitted in the conventional methods, it becomes difficult to achieve the above results based on the aminosilane and epoxysilane, and it becomes difficult to obtain a high-quality polarizing lens.

The present inventors conducted extensive research into the above points, resulting in the surprising discovery that when the lens was immersed in water instead of conducting a heat treatment following application of the silane coupling agent, by forming a coating on the polarizing layer in a film-forming step accompanying a heat treatment, it was possible to achieve a good orientation state in the dichroic dye in the polarizing layer and to enhance adhesion and coating strength. The eference aspect was devised on that basis.

The reference aspect relates to a method of manufacturing a polarizing lens, which comprises:
preparing a laminated body comprising a polarizing layer comprising a dichroic dye on a lens substrate;
conducting an aminosilane treatment by impregnating the polarizing layer with an amino group-containing silane coupling agent; and
conducting an epoxysilane treatment by impregnating the polarizing layer after the aminosilane treatment with an epoxy group-containing silane coupling agent;
characterized by:
   conducting a water immersion step in which the laminated body is immersed in water without conducting a heat treatment to promote reaction of the coupling agents respectively after the aminosilane treatment and after the epoxysilane treatment; and
   conducting a film-forming step in which a heat treatment is conducted on the polarizing layer that has been subjected to the water immersion step after the epoxysilane treatment to form a coating.

In an embodiment the reference aspect, the film-forming step is conducted by conducting a heat treatment to form a cured coating after coating a thermosetting composition on the polarizing layer that has been subjected to a water immersion step following the epoxysilane treatment.

In an embodiment of the reference aspect, the water immersion step is conducted by immersing the laminated body for 5 to 30 minutes in water.

Based on the reference aspect, the heat treatment following the aminosilane application and the epoxysilane application are rendered unnecessary, thereby enhancing productivity and providing a high-quality polarizing lens with good durability and without haze due to poor orientation of the dichroic dye.

The reference aspect will be described in greater detail below.

The method of manufacturing a polarizing lens of the reference aspect comprises preparing a laminated body comprising a polarizing layer comprising a dichroic dye on a lens substrate; conducting an aminosilane treatment by impregnating the polarizing layer with an amino group-containing silane coupling agent; and conducting an epoxysilane treatment by impregnating the polarizing layer after the aminosilane treatment with an epoxy group-containing silane coupling agent. In the reference aspect, a water immersion step is conducted in which the laminated body is immersed in water without conducting heat treatments to promote reaction of the coupling agents respectively after the aminosilane treatment and after the epoxysilane treatment; and a film-forming step is conducted, in which a heat treatment is conducted, on the polarizing layer that has been subjected to the water immersion step after the epoxysilane treatment to form a coating. As set forth above, this can provide a high-quality polarizing lens with good productivity. The polarizing lens thus obtained is suitable as an eyeglass lens of which high transparence and good durability are required.

### Aminosilane treatment

In the reference aspect, after preparing a laminated body having a polarizing layer on a lens substrate, the polarizing layer of the laminated body is impregnated with an amino group-containing silane coupling agent (aminosilane). The method of impregnating the polarizing layer with the aminosilane is as set forth above for the method of manufacturing a polarizing lens according to an aspect of the present invention.

The details relating to the aminosilane and aminosilane solution that can be used in the reference aspect are as set forth above for the method of manufacturing a polarizing lens according to an aspect of the present invention.

In the conventional process of manufacturing a polarizing lens, a heat treatment is conducted to promote reaction of the coupling agent after impregnating the polarizing layer with an aminosilane. By contrast, in the reference aspect, this heat treatment is not conducted. Thus, since the time required by the above heat treatment and the time required for cooling the laminated body after the heat treatment can be eliminated, the process can be shortened. In the reference aspect, the heat treatment for promoting reaction of the coupling agent refers to placing the laminated body in an environment (such as in a heating furnace) in which the temperature is controlled to greater than room temperature.

Instead of the above heat treatment, in the reference aspect, a water immersion step is conducted in which the laminated body following the aminosilane treatment is immersed in water. The water in which the laminated body is immersed can be tap water, pure water, ultrapure water, ion-exchange water, distilled water, or the like. The period of immersion in water is desirably about 5 to 30 minutes from the perspective of obtaining a high-quality polarizing lens with maintained productivity and without a heat treatment. The temperature of the water in which the laminated body is immersed can be adjusted (by cooling or heating), but such is not necessary. The laminated body can be immersed in water at room temperature to adequately achieve the desired effect.

### Epoxysilane treatment

Subsequently, the laminated body that has been removed from the water is optionally wiped to remove moisture from the surface thereof and then subjected to an epoxysilane treatment. Details relating to the epoxy group-containing silane coupling agent and epoxy group-containing silane coupling agent solution (epoxysilane solution), and the method of impregnating the polarizing layer with this solution are as set forth above for the method of manufacturing a polarizing lens according to an aspect of the present invention.

In the conventional process of manufacturing a polarizing lens, a heat treatment is conducted to promote the reaction of the coupling agent after impregnating the polarizing layer with an epoxysilane. However, this heat treatment is not conducted in the reference aspect. Thus, as set forth above regarding the aminosilane treatment, the time required for the heat treatment and for cooling of the laminated body after the heat treatment can be eliminated, thereby shorting the process. Instead of this heat treatment, in the reference aspect, a water immersion step is conducted in which the laminated body is immersed in water following the epoxysilane treatment. This step is as set forth above for the water immersion step following the aminosilane treatment.

### Forming the coating

In the method of manufacturing a polarizing lens according to the reference aspect, after conducting the water immersion step following the epoxysilane treatment, moisture is optionally wiped off the surface after which a coating is formed by a film-forming step in which a heat treatment is conducted. In the heat treatment that is conducted here, progression of the curing reaction of the epoxysilane and aminosilane is thought to be why a high-quality lens can be obtained by the reference aspect. However, as indicated in reference examples set forth further below, investigation by the present inventors has clearly shown that immobilization of the orientation state of the dichroic dye, strengthening of the coating on the polarizing layer, and enhancement of adhesion to the underlying layer are not achieved without the water immersion step even when a film-forming step, in which a heat treatment is conducted, is conducted. It is presumed that the immersion in water causes some change in the state of existence of the silane coupling agent in the polarizing layer.

The cured coating that is formed on the polarizing layer is desirably a hardcoat layer from the perspective of enhancing lens durability. In the reference aspect, it is possible to apply various cured coatings that are generally used as hardcoat layers. Such cured coatings can be formed by applying a thermosetting composition and then conducting a heat treatment. From the perspectives of both enhancing lens durability and achieving optical characteristics, the thickness thereof desirably falls within a range of 0.5 to 10 µm.

The thermosetting composition for forming the cured coating desirably contains an organic silicon compound and metal oxide particles. The use of such a thermosetting composition permits the formation of a hardcoat layer that contributes to enhancing lens durability. One example of a composition permitting the formation of a hardcoat layer is given in Japanese Unexamined Patent Publication (KOKAI) Showa No. 63-10640.

The organic silicon compound denoted by general formula (I) below, or its hydrolysis products, are examples of desirable embodiments of the organic silicon compound.

(R¹)ₐ (R³)_{b} Si(OR²)_{4-(a+b)} ... (I)

In general formula (I), R¹ denotes an organic group comprising a glycidoxy group, epoxy group, vinyl group, methacryloxy group, acryloxy group, mercapto group, amino group, phenyl group, or the like. R² denotes an alkyl group with 1 to 4 carbon atoms, acyl group with 1 to 4 carbon atoms, or aryl group with 6 to 10 carbon atoms. R³ denotes an alkyl group with 1 to 6 carbon atoms or an aryl group with 6 to 10 carbon atoms, and a and b respectively denote 0 or 1.

The alkyl group with 1 to 4 carbon atoms denoted by R² is a linear or branched alkyl group. Specific examples are a methyl group, ethyl group, propyl group, and butyl group.

Examples of acyl groups with 1 to 4 carbon atoms denoted by R² are acetyl groups, propionyl groups, oleyl groups, and benzoyl groups.

Examples of aryl groups with 6 to 10 carbon atoms denoted by R² are phenyl groups, xylyl groups, and tolyl groups.

Alkyl groups with 1 to 6 carbon atoms denoted by R³ can be linear or branched alkyl groups. Specific examples are methyl groups, ethyl groups, propyl groups, butyl groups, pentyl groups, and hexyl groups.

Examples of aryl groups with 6 to 10 carbon atoms denoted by R³ are phenyl groups, xylyl groups, and tolyl groups.

Specific examples of the compound denoted by general formula (I) above are those described in paragraph [0073] in Japanese Unexamined Patent Publication (KOKAI) No. 2007-077327. Since the organic silicon compound denoted by general formula (I) has a curable group, conducting a curing treatment following coating permits the formation of a hardcoat layer in the form of a cured film.

The above metal oxide particles contained in the hardcoat layer can contribute to adjustment of the refractive index of the hardcoat layer and enhancing hardness. Specific examples are particles of tungsten oxide (WO₃), zinc oxide (ZnO), silicon oxide (SiO₂), aluminum oxide (AlO₃), titanium oxide (TiO₂), zirconium oxide (ZrO₂), tin oxide (SnO₂), beryllium oxide (BeO), antimony oxide (Sb₂O₅) and the like, which can be used singly or in combinations of two or more metal oxide particles. From the perspective of achieving both scratch resistance and optical characteristics, the diameter of the metal oxide particles desirably falls within a range of 5 to 30 nm. For the same reasons, the content of the metal oxide particles in the hardcoat layer can be suitably established taking into account the refractive index and hardness. However, the content is normally about 5 to 80 mass percent of the solid component of the hardcoat composition. From the perspective of dispersion in the hardcoat layer, the metal oxide particles are desirably colloidal particles.

The hardcoat layer can be formed by mixing the above components and, as needed, optional components such as organic solvents and surfactants (leveling agents) to prepare a hardcoat composition, which is then coated on the surface of the laminated body and heat treated (thermoset). Commonly employed methods, such as dipping, spin-coating, and spraying can be applied as the means of coating the coating composition. From the perspective of surface precision, dipping and spin-coating are desirable. The heat treatment for curing can be conducted, for example, by positioning a lens on which a thermosetting composition has been coated for about 30 minutes to 2 hours in an environment with a temperature of atmosphere of 50 to 150°C.

An additional specific example of a coating formed by a film-forming step in which heating is conducted is a waterborne resin layer formed by drying a waterborne resin composition by heating. The waterborne resin layer can function as a primer layer to enhance adhesion. For details, reference can be made to Japanese Unexamined Patent Publication (KOKAI) No. 2011-170339, paragraphs [0036] to [0044].

The heat treatment to form the primer layer can be conducted, by way of example, by placing a lens that has been coated with a waterborne resin composition for 5 minutes to 24 hours in an environment with a temperature of atmosphere of 40 to 100°C. The thickness of the primer layer that is formed is desirably about 0.1 to 0.5 µm.

In the reference aspect, in addition to the various layers set forth above, known functional films can be formed at any position. Examples of these functional films are functional films such as antireflective films, water-repellent films, ultraviolet-absorbing films, infrared-absorbing films, photochromic films, and antistatic films.

Details regarding other matters for the reference aspect are as set forth for the polarizing lens according to an aspect of the present invention.

### EXAMPLES

The present invention will be described in greater detail below through Examples. However, the present invention is not limited to the embodiments given in Examples.

### 1. Examples and Comparative Examples relating to the method of manufacturing a polarizing lens according to an aspect of the present invention

### [Comparative Example 1]

### Preparation of a polarizing lens

### (1) Forming an orientation layer

An SiO₂ film was formed to a thickness of 0.2 µm by vacuum vapor deposition on the concave surface of a lens substrate in the form of a polyurethane urea lens (product name Phoenix, made by HOYA Corp., refractive index 1.53, with hardcoat, diameter 70 mm, base curve 4, center thickness 1.5 mm).

The SiO₂ film that was formed was subjected to a uniaxial polishing treatment for 30 seconds under conditions of 350 rpm and a polishing pressure of 50 g/cm² using an abrasive-containing urethane foam (abrasive: product name POLIPLA 203A, made by Fujimi Inc., Al₂O₃ particles with an average particle diameter of 0.8 µm, urethane foam: roughly the same shape as the curvature of the above concave lens surface). The polished lens was rinsed with pure water and dried.

### (2) Forming a polarizing layer

After drying the lens, 2 to 3 g of a roughly 5 mass percent aqueous solution of water-soluble dichroic dye (product name Varilight Solution 2S, made by Sterling Optics, Inc.) was applied by spin-coating to the polished surface, forming a polarizing film. The spin-coating was conducted by feeding the aqueous solution of the dye at 300 rpm maintained for 8 seconds, 400 rpm maintained for 45 seconds, and then 1,000 rpm maintained for 12 seconds.

Next, a pH 3.5 aqueous solution with an iron chloride concentration of 0.15 M and a calcium hydroxide concentration of 0.2 M was prepared. The lens that had been prepared was immersed for about 30 seconds in this aqueous solution. It was then withdrawn and thoroughly rinsed with pure water. This step rendered the water-soluble dye insoluble (water insolubility treatment).

### (3) Aminosilane treatment

Following (2) above, the lens was immersed for 15 minutes in a 20 mass percent aqueous solution of γ-aminopropyltriethoxysilane (aminosilane solution), subsequently rinsed three times with pure water, and heat treated for 60 minutes in a heating furnace (internal furnace temperature 80°C), removed from the furnace, and cooled to room temperature.

### (4) Epoxysilane treatment

Following cooling, the lens was immersed for 10 minutes in a 10 mass percent aqueous solution of γ-glycidoxypropyltrimethoxysilane (epoxysilane solution) at room temperature, subsequently rinsed three times with pure water, heat treated for 60 minutes in a heating furnace (internal furnace temperature 80°C), removed from the furnace, and cooled to room temperature.

### (5) Forming a primer layer

A waterborne polyurethane resin composition was coated by spin-coating by the following method on the surface of the polarizing layer after the above epoxysilane treatment.

A waterborne polyurethane resin composition in the form of the product Adeka Bontiter HUX-232 made by Adeka Corp. (an aqueous dispersion obtained by dispersing in water a terminal isocyanate prepolymer with carboxyl groups having a polyester polyol on a main skeleton, solid component 30 mass percent, particle diameter of resin component less than 0.1 µm, viscosity at 25°C of 20 mPa·s, pH 8.5 at 25°C) was diluted six-fold with propylene glycol monomethyl ether for use. This composition was coated on the polarizing layer by spin-coating (800 rpm x 40 s), after which the lens was dried by a heat treatment for 30 minutes in a heating furnace (internal furnace temperature 60°C), forming a primer layer (waterborne resin layer) 0.1 to 0.5 µm in thickness.

### (6) Forming a hardcoat layer

To a glass container equipped with magnetic stirrer were charged 17 mass parts of γ-glycidoxypropyltrimethoxysilane, 30 mass parts of methanol, and 28 mass parts of an aqueous dispersion of colloidal silica (solid component 40 mass percent, average particle diameter 15 nm). The mixture was thoroughly mixed and then stirred for 24 hours at 5°C. Next, 15 mass parts of propylene glycol monomethyl ether, 0.05 mass part of silicone-based surfactant, and 1.5 mass part of a curing agent in the form of aluminum acetylacetonate were added. The mixture was thoroughly stirred and then filtered to prepare a hard coating liquid (hardcoat composition). The coating liquid was about pH 5.5. The surface of the primer layer of a lens that had been subjected to the treatment of (5) above was coated by dipping (drawing rate 20 cm/minute) in the hardcoat composition that had been prepared and heat treated for 60 minutes in a heating furnace (internal furnace temperature 100°C) to form a hardcoat layer 3 µm in thickness.

A polarizing lens sequentially having on a lens substrate a hardcoat layer, orientation layer, polarizing layer, primer layer, and thermoset hardcoat layer was obtained by the above process.

### [Comparative Example 2]

With the exception that the immersion time in the epoxysilane solution in the epoxysilane treatment was changed as shown in Table 1, a polarizing lens was obtained by the same operation as in Comparative Example 1.

### [Comparative Example 3]

With the exception that no epoxysilane treatment was conducted, a polarizing lens was obtained by the same operation as in Comparative Example 1.

### [Examples 1 to 3]

Example 1 is not according to the invention. With the exception that the immersion times in the epoxysilane solution in the epoxysilane treatment were changed as shown in Table 1, polarizing lenses were obtained by the same operation as in Comparative Example 1.

### Evaluation Methods

### 1. Rate of increase in film thickness of polarizing layer by epoxysilane treatment

The film thickness at the geometric center of the polarizing layer of each polarizing lens that was prepared in Examples and Comparative Examples was measured with a non-contact film thickness measuring apparatus based on optical interferometry (FF8 non-contact-type film thickness measuring apparatus made by Systemroad Co., Ltd.). With the film thickness of Comparative Example 3 (no epoxysilane treatment) as the standard, the rate of increase in the film thickness by the epoxysilane treatment was calculated. The calculated values are given in Table 1. The film thickness at the geometric center of the polarizing layer in the polarizing lens prepared in Comparative Example 3 was 0.94 µm.

### 2. Evaluation of presence of haze

The haze value of each of the polarizing lenses prepared was measured with an MH-150 Hazemeter made by Murakami Color Research Laboratory and the absence or presence of haze was evaluated according to the following standard. A haze value of equal to or lower than 0.4 percent was determined to afford transparence suited to use as an eyeglass lens. The results are given in Table 1.

### (Evaluation standard)

○: No haze (haze value ≤ 0.4 percent)
X: Haze present (haze value > 0.4 percent%)

**[Table 1]**

| | Epoxysilane treatment time | Rate of increase in film thickness of polarizing layer | Absence or presence of haze | Haze value (percent) |
|---|---|---|---|---|
| Comp. Ex. 1 | 10 minutes | 3 percent | × | 0.82 |
| Comp. Ex. | 20 minutes | 5 percent | × | 0.45 |
| 2 | | | | |
| Comp. Ex. 3 | -(no epoxysilane treatment) | -- | × | 1.33 |
| Ex. 1 | 30 minutes | 8 percent | ○ | 0.34 |
| Ex. 2 | 60 minutes | 9 percent | ○ | 0.25 |
| Ex. 3 | 90 minutes | 10 percent | ○ | 0.25 |

As shown in Table 1, haze was observed in the polarizing lenses of Comparative Examples 1 to 3. Thus, when the sectional states of the polarizing lenses of Comparative Examples 1 to 3 were observed by a scanning electron microscope (SEM) (applied voltage 10 kV, 5,000-fold magnification), cracks were seen in the polarizing layer. A reference test was conducted separately from the above Examples and Comparative Examples to determine whether or not the occurrence of cracks in the polarizing layer was inhibited by changing the immersion time in the aminosilane solution in the aminosilane treatment, but differences in the aminosilane treatment were not observed to tend to generate cracks in the polarizing layer.

Further, with the exception that the lens substrate was replaced with a diethylene glycol bisallylcarbonate lens (product name HILUX, made by HOYA Corp., refractive index 1.50, with hardcoat, diameter 70 mm, base curve 4, center thickness 1.5 mm), operation and evaluation conducted in the same manner as in Examples 1 to 3 and Comparative Examples 1 to 3 above revealed that in Examples where the rate of change in the film thickness of the polarizing layer by the epoxysilane treatment was equal to or greater than 8 percent, it was possible to obtain a high-quality polarizing lens without haze. Based on the above results, conducting an epoxysilane treatment producing a rate of increase in film thickness of the polarizing layer of equal to or greater than 8 percent was found to inhibit cracks in the polarizing layer and the generation of haze due to these cracks and yield a high-quality polarizing lens.

### 2. Reference Examples and Comparative Reference Examples relating to the method of manufacturing a polarizing lens according to the reference aspect

### [Reference Examples 1 to 3]

### Preparation of polarizing lenses

### (1) Forming an orientation layer

An SiO₂ film was formed to a thickness of 0.2 µm by vacuum vapor deposition on the concave surface of a lens substrate in the form of a polyurethane urea lens (product name Phoenix, made by HOYA Corp., refractive index ne = 1.53, with hardcoat, diameter 70 mm, base curve 4, center thickness 1.5 mm).

The SiO₂ film that was formed was subjected to a uniaxial polishing treatment for 30 seconds under conditions of 350 rpm and a polishing pressure of 50 g/cm² using an abrasive-containing urethane foam (abrasive: product name POLIPLA 203A, made by Fujimi Inc., Al₂O₃ particles with an average particle diameter of 0.8 µm, urethane foam: roughly the same shape as the curvature of the above concave lens surface). The polished lens was rinsed with pure water and dried.

### (2) Forming a polarizing layer

After drying the lens, 2 to 3 g of a roughly 5 mass percent aqueous solution of water-soluble dichroic dye (product name Varilight Solution 2S, made by Sterling Optics, Inc.) was applied by spin-coating to the polished surface, forming a polarizing film. The spin-coating was conducted by feeding the aqueous solution of the dye at 300 rpm maintained for 8 seconds, 400 rpm maintained for 45 seconds, and then 1,000 rpm maintained for 12 seconds.

Next, a pH 3.5 aqueous solution with an iron chloride concentration of 0.15 M and a calcium hydroxide concentration of 0.2 M was prepared. The lens prepared was immersed for about 30 seconds in this aqueous solution. It was then withdrawn and thoroughly rinsed with pure water. This step rendered the water-soluble dye insoluble (water insolubility treatment).

### (3) Aminosilane treatment and water immersion step

Following (2) above, the lens was immersed for 15 minutes in a 20 mass percent aqueous solution of γ-aminopropyltriethoxysilane (aminosilane solution), subsequently rinsed three times with pure water, and immersed in pure water for the period indicated in Table 1.

### (4) Epoxysilane treatment and water immersion step

The lens was removed from the water, the moisture on the surface thereof was wiped away, and the lens was immersed for 10 minutes in a 10 mass percent aqueous solution of γ-glycidoxypropyltrimethoxysilane (epoxysilane solution). Subsequently, the lens was rinsed three times with pure water and immersed for the period indicated in Table 1 in pure water.

### (5) Forming a primer layer

A waterborne polyurethane resin composition was coated by spin-coating by the following method on the surface of the polarizing layer following the water immersion step of (4) above.

A waterborne polyurethane resin composition in the form of the product Adeka Bontiter HUX-232 made by Adeka Corp. (an aqueous dispersion obtained by dispersing in water a terminal isocyanate prepolymer with carboxyl groups having a polyester polyol on a main skeleton, solid component 30 mass percent, particle diameter of resin component less than 0.1 µm, viscosity at 25°C of 20 mPa·s, pH 8.5 at 25°C) was diluted six-fold with propylene glycol monomethyl ether for use. This composition was coated on the polarizing layer by spin-coating (800 rpm x 40 s), after which the lens was dried by a heat treatment for 30 minutes in a heating furnace (internal furnace temperature 60°C), forming a primer layer (waterborne resin layer) 0.1 to 0.5 µm in thickness.

### (6) Forming a hardcoat layer

To a glass container equipped with magnetic stirrer were charged 17 mass parts of γ-glycidoxypropyltrimethoxysilane, 30 mass parts of methanol, and 28 mass parts of an aqueous dispersion of colloidal silica (solid component 40 mass percent, average particle diameter 15 nm). The mixture was thoroughly mixed and then stirred for 24 hours at 5°C. Next, 15 mass parts of propylene glycol monomethyl ether, 0.05 mass part of silicone-based surfactant, and 1.5 mass part of a curing agent in the form of aluminum acetylacetonate were added. The mixture was thoroughly stirred and then filtered to prepare a hard coating liquid (thermosetting composition). The coating liquid was about pH 5.5. The surface of the primer layer of a lens that had been subjected to the treatment of (5) above was coated by dipping (drawing rate 20 cm/minute) in the hardcoating liquid that had been prepared and heat treated for 60 minutes in a heating furnace (internal furnace temperature 100°C) to form a hardcoat layer 3 µm in thickness.

A polarizing lens sequentially having on a lens substrate a hardcoat layer, orientation layer, polarizing layer, primer layer, and thermoset hardcoat layer was obtained by the above process.

### [Comparative Reference Example 1]

With the exception that no water immersion step was conducted after the aminosilane treatment and the epoxysilane treatment, a polarizing lens was obtained by the same operation as in the above Examples.

### Evaluation Methods

### 1. Evaluation of the presence of haze

The haze value was measured and the absence or presence of haze was evaluated by the same method and evaluation standard as in the above evaluation of Examples and Comparative Examples. The results are given in Table 2.

### 2. Evaluation of durability

Crosscuts were made in the hardcoat layer at 1.5 mm intervals to form 100 squares. Adhesive tape (cellophane tape made by Nichiban Co., Ltd.) was firmly applied over the crosscuts, the adhesive tape was rapidly peeled off, and the number of the squares of cured film that separated among 100 squares was counted. The evaluation standard is given below. The results are given in Table 2.

### (Evaluation standard)

○: Separation of 0 to 2/100 squares
Δ: Separation of 3 to 5/100 squares
X: Separation of 6/100 or more squares

**[Table 2]**

| | Water immersion time following aminosilane treatment | Water immersion time following epoxysilane treatment | Absence or presence of haze | Durability evaluation |
|---|---|---|---|---|
| Reference Ex. 1 | 10 minutes | 10 minutes | ○ | ○ |
| Reference Ex. 2 | 20 minutes | 20 minutes | ○ | ○ |
| Reference Ex. 3 | 30 minutes | 30 minutes | ○ | ○ |
| Comp. Ref. Ex. 1 | 0 minute | 0 minute | × | × |

As shown in Table 2, the polarizing lens of Comparative Reference Example 1 was found to have haze. Thus, when the sectional state of the polarizing lens of Comparative Reference Example 1 was examined by a scanning electron microscope (SEM) (applied voltage 10 kV, magnification 5,000-fold), cracks were present in the polarizing layer. The fact that the orientation state of the dichroic dye had not been adequately restricted in the polarizing layer caused the generation of cracks. Thus, a comparison of the Reference Example and the Comparative Reference Example confirmed that the water immersion step that was conducted in Examples contributed to properly orienting the dichroic dye.

Visual observation of the polarizing lens of Comparative Reference Example 1 following durability evaluation revealed that separation had occurred in the vicinity of the boundary between the polarizing layer and orientation layer. Based on the result, the water immersion step conducted in the Reference Examples was determined to increase the coating strength of the polarizing layer and adhesion to the layer beneath.

Based on the above results, it was demonstrated that the reference aspect could provide a high-quality polarizing lens.

The present invention is useful in the field of manufacturing eyeglass lenses.

## Claims

1. A method of manufacturing a polarizing lens, which comprises:
forming a polarizing layer comprising a dichroic dye on a lens substrate; and
conducting an epoxysilane treatment to impregnate the polarizing layer with an epoxy group-containing silane coupling agent such that a rate of increase in a film thickness of the polarizing layer by the epoxysilane treatment is equal to or greater than 9 percent.

2. The method of manufacturing a polarizing lens according to claim 1, which further comprises conducting an aminosilane treatment to impregnate the polarizing layer with an amino group-containing silane coupling agent prior to conducting the epoxysilane treatment.

3. The method of manufacturing a polarizing lens according to claim 1 or 2, wherein the rate of increase in a film thickness is equal to or greater than 9 percent and equal to or lower than 10 percent.

4. The method of manufacturing a polarizing lens according to any of claims 1 to 3, which further comprises, after the epoxysilane treatment, conducting a functional film-forming step in which heating is conducted.

5. The method of manufacturing a polarizing lens according to any of claims 1 to 4, wherein the polarizing layer is formed on a surface of an orientation layer after forming the orientation layer on the lens substrate.

## Patentansprüche

1. Verfahren zur Herstellung einer Polarisationslinse, welches umfasst:
Bilden einer Polarisationsschicht, umfassend einen dichroitischen Farbstoff, auf einem Linsensubstrat; und
Ausführen einer Epoxysilanbehandlung, um die Polarisationsschicht mit einem epoxygruppenhaltigen Silankupplungsmittel zu imprägnieren, so dass eine Rate der Zunahme in der Filmdicke der Polarisationsschicht durch die Epoxysilanbehandlung gleich oder größer ist als 9 Prozent.

2. Verfahren zur Herstellung einer Polarisationslinse gemäß Anspruch 1, welches des Weiteren das Ausführen einer Aminosilanbehandlung zur Imprägnierung der Polarisationsschicht mit einem aminogruppenhaltigen Silankupplungsmittel vor dem Ausführen der Epoxysilanbehandlung umfasst.

3. Verfahren zur Herstellung einer Polarisationslinse gemäß Anspruch 1 oder 2, wobei die Rate der Zunahme in der Filmdicke gleich oder größer ist als 9 Prozent und gleich oder geringer als 10 Prozent.

4. Verfahren zur Herstellung einer Polarisationslinse gemäß einem der Ansprüche 1 bis 3, welches des Weiteren nach der Epoxysilanbehandlung die Ausführung eines Schritts zur Bildung eines funktionellen Films umfasst, wobei Erwärmen ausgeführt wird.

5. Verfahren zur Herstellung einer Polarisationslinse gemäß einem der Ansprüche 1 bis 4, wobei die Polarisationsschicht auf einer Oberfläche von einer Orientierungsschicht gebildet wird, nachdem die Orientierungsschicht auf dem Linsensubstrat gebildet worden ist.

## Revendications

1. Procédé de fabrication d'une lentille polarisante, lequel comprend :
la formation d'une couche polarisante comprenant un colorant dichroïque sur un substrat de lentille ; et
la réalisation d'un traitement à l'époxysilane pour imprégner la couche polarisante avec un agent de couplage de silane contenant un groupe époxy de sorte qu'une vitesse d'augmentation dans une épaisseur de film de la couche polarisante par le traitement à l'époxysilane est supérieure ou égale à 9 pourcent.

2. Procédé de fabrication d'une lentille polarisante selon la revendication 1, lequel comprend de plus la réalisation d'un traitement à l'aminosilane pour imprégner la couche polarisante avec un agent de couplage de silane contenant un groupe amino avant la réalisation du traitement à l'époxysilane.

3. Procédé de fabrication d'une lentille polarisante selon la revendication 1 ou 2, dans lequel la vitesse d'augmentation dans une épaisseur de film est supérieure ou égale à 9 pourcent et inférieure ou égale à 10 pourcent.

4. Procédé de fabrication d'une lentille polarisante selon l'une quelconque des revendications 1 à 3, lequel comprend de plus, après le traitement à l'époxysilane, la réalisation d'une étape de formation de film fonctionnel dans laquelle un chauffage est réalisé.

5. Procédé de fabrication d'une lentille polarisante selon l'une quelconque des revendications 1 à 4, dans lequel la couche polarisante est formée sur une surface d'une couche d'orientation après formation de la couche d'orientation sur le substrat de lentille.
